(19) Europäisches Patentamt
European Patent Office
Office européen des brevets

(11) Veröffentlichungsnummer: **0 077 295**
**A1**

(12) **EUROPÄISCHE PATENTANMELDUNG**

(21) Anmeldenummer: **82810405.9**

(22) Anmeldetag: **29.09.82**

(51) Int. Cl.³: **B 29 D 11/02**, C 08 L 29/04, C 08 F 8/42

(30) Priorität: **05.10.81 US 308742**

(43) Veröffentlichungstag der Anmeldung: **20.04.83 Patentblatt 83/16**

(84) Benannte Vertragsstaaten: **AT BE CH DE FR IT LI LU NL SE**

(71) Anmelder: **AGRIPAT AG, Schwarzwaldallee 215, CH-4058 Basel (CH)**

(72) Erfinder: **Lee, Ping I., Dr., 6 Five Oaks Lane, Valley Cottage New York 10989 (US)**

(74) Vertreter: **Stamm, Otto et al, CIBA-GEIGY AG Postfach, CH-4002 Basel (CH)**

(54) **Kontaktlinse aus mit Borat vernetztem Polyvinylalkohol.**

(57) Es werden weiche Kontaktlinsen aus Polyvinylalkohol mit einem Gewichtsmittel des Molekulargewichts von mindestens etwa 6000, der mit Borat in einer zur Erhöhung des Elastizitätsmoduls ausreichenden Menge vernetzt ist, beschrieben. Diese Linsen sind in der Tränenflüssigkeit des Auges im wesentlichen unlöslich. Ferner werden Verfahren zur Herstellung dieser Linsen beschrieben. Diese Materialien zeichnen sich durch einen hohen Wassergehalt, eine hohe Permeabilität für gelösten Sauerstoff, eine hohe optische Klarheit und insbesondere durch ihre überlegene mechanische Festigkeit aus.

EP 0 077 295 A1

43-13584/+

## Kontaktlinse aus mit Borat vernetztem Polyvinylalkohol

Die Erfindung betrifft weiche Kontaktlinsen, die aus mit Borat vernetztem Polyvinylalkohol hergestellt sind.

Im allgemeinen haben weiche Hydrogel-Materialien für Kontaktlinsen auf Basis von HEMA- (auch bekannt als Hydroxyäthylmethacrylat oder als Äthylenglykolmonomethacrylat) -Polymerisaten den Nachteil einer geringen mechanischen Festigkeit und/oder einer geringen Permeabilität für gelösten Sauerstoff.

Über die Verwendung von Polyvinylalkohol-Filmen und -Gelen als ophthalmologische Einlagen im unteren Bindehautsack nach Tränkung mit Antibiotika, wie Tetracyclin, Pilocarpin, Atropin und dergleichen, wurde berichtet. Derartige Materialien liegen entweder in Form von vernetzten Filmen oder als wasserlösliche viskose Lösungen oder Gele vor; vgl. z.B. Y.F. Maichuk, Ophthalmic Drug Inserts, Invest. Ophthalmol., Bd. 14, S. 87 bis 90 (1975); D.W. Lamberts, Solid Delivery Devices, Int. Ophthalmol. Clinic., Bd. 20, Nr. 3, S. 68 bis 69 (1980); und Y.F. Maichuk, Antibiotik. Bd. 12, Nr. 4, S. 432 bis 435 (1967). Auch mit Glyoxal vernetzter Polyvinylalkohol wurde als Kontaktlinsenmaterial vorgeschlagen; vgl. US-PS 3 408 429. Ungünstigerweise ist die Bildung der Acetal- und Halbacetalgruppe, die bei der Vernetzungsreaktion entsteht, unter schwach sauren Bedingungen reversibel, was eine mögliche Freisetzung von Glyoxal aus dem vernetzten Material zur Folge hat. Glyoxal wirkt bekanntlich auf Haut und Schleimhäute reizend.

Ferner sind bei weichen Kontaktlinsen auf der Basis von vernetzten Hydrogelen im allgemeinen kostspielige Dreh- und Polierschritte oder ein aufwendiges Schleudergiessverfahren, bei dem während des Giessvorgangs in situ die Polymerisation und Vernetzung stattfindet, erforderlich.

Ferner wurde die Verwendung von Borsäure und Polyvinylacetat zur Behandlung von Polyvinylalkohol-Filmen beschrieben, um diese Filme in einen vernebelten oder trüben Zustand zu überführen; vgl. Chemical Abstracts, Bd. 66, 76674f (1967). Im Gegensatz dazu weisen die vorliegenden, mit Borat vernetzten Polyvinylalkohol-Kontaktlinsen eine ausgezeichnete optische Klarheit auf, wobei kein Abbau der optischen Klarheit erkennbar ist.

Vernetzte hydrophile Polymerisate und daraus hergestellte weiche Hydrogel-Kontaktlinsen sind bekannt. Derartige Polymerisate basieren im allgemeinen auf HEMA, auch bekannt als Hydroxyäthylmethacrylat oder Äthylenglykolmonomethacrylat, mit einem oder mehreren eventuellen Comonomeren; vgl. US-PSen 2 976 576, 3 841 985 und 3 985 697.

Weitere N-Vinylpyrrolidon-Copolymerisate und Acrylamid-Copolymerisate auf Hydrogelbasis sind in den US-PSen 3 639 524 und 3 929 741 beschrieben. Diese herkömmlichen Hydrogelpolymerisate weisen den Nachteil einer geringen mechanischen Festigkeit, und/oder einer ungenügenden Permeabilität für gelösten Sauerstoff auf. Bemühungen, die Sauerstoffpermeabilität durch Erhöhung des Wassergehalts in den Hydrogelen zu erhöhen, bewirken eine weitere, so weitgehende Verschlechterung der mechanischen Festigkeit der Linsenmaterialien, dass sie äusserst brüchig werden.

Aufgabe der Erfindung ist es, weiche Kontaktlinsen zur Verfügung zu stellen, mit denen die vorerwähnten Nachteile des Stands der Technik vermieden oder weitgehend verringert werden können.

Eine weitere Aufgabe der Erfindung ist es, Kontaktlinsen mit einem Gehalt an Polyvinylalkohol, der mit einem Borat vernetzt

ist, zur Verfügung zu stellen, so dass die vernetzten Linsen im wesentlichen in der durch die Tränenflüssigkeit gebildeten Umgebung unlöslich sind sowie einen hohen Wassergehalt, eine hohe Permeabilität für gelösten Sauerstoff und eine überlegene mechanische Festigkeit aufweisen.

Schliesslich ist es auch Aufgabe der Erfindung, ein rasches, einfaches und billiges Press- und Schleudergiessverfahren zur Herstellung derartiger Linsen bereitzustellen.

Erfindungsgemäss werden optisch klare, weiche Kontaktlinsen aus gequollenem, festem Polyvinylalkohol mit einem Gewichtsmittel des Molekulargewichts von mindestens etwa 6000, der mit einem Borat in einer zur Erhöhung des Elastizitätsmoduls ausreichenden Menge vernetzt ist, zur Verfügung gestellt, wobei die Linsen in Tränenflüssigkeit, in der sie eingesetzt werden, im wesentlichen unlöslich sind.

Vorzugsweise weist der Polyvinylalkohol ein Gewichtsmittel des Molekulargewichts von mindestens etwa 10 000 auf.

Als Obergrenze kann der Polyvinylalkohol ein Gewichtsmittel des Molekulargewichts bis zu 1 000 000 haben. Vorzugsweise weist der Polyvinylalkohol ein Gewichtsmittel des Molekulargewichts bis zu 300 000 auf.

Polyvinylalkohol wird im allgemeinen durch Hydrolyse des entsprechenden Polyvinylacetats hergestellt. Gemäss einer bevorzugten Ausführungsform enthält der Polyvinylalkohol weniger als 1 Prozent Polyvinylacetateinheiten.

Ausserdem kann der Polyvinylalkohol untergeordnete Mengen an Copolymerisateinheiten von Äthylen, Propylen, Acrylamid, Methacrylamid, Dimethacrylamid, Hydroxyäthylmethacrylat, Methylmethacrylat, Methylacrylat, Äthylacrylat, Vinylpyrrolidon, Hydroxyäthylacrylat, Allylalkohol und dergleichen, enthalten. Vorzugsweise sollte das Polymerisat nicht mehr als 5 Prozent

andere Einheiten als die von Vinylalkohol enthalten. Insbesondere enthält der Polyvinylalkohol weniger als 1 Prozent derartiger Copolymerisateinheiten.

Es kann handelsübliches Polyvinylalkohol-Harz verwendet werden, z.B. ELVANOL 71-30, hergestellt von DuPont, oder Vinol 125, hergestellt von Air Products, Inc.

Vorzugsweise ist der zu vernetzende Polyvinylalkohol in Wasser bis zu 50°C und insbesondere bis zu 60°C im wesentlichen unlöslich.

Das Polyvinylalkohol-Harz wird mit einer wässrigen Lösung eines Borats mit einem pH-Wert von mehr als 7 behandelt.

Zu den für die Vernetzung geeigneten Boraten gehören Alkalimetall- und Erdalkalimetallborate, Ammoniumborate und Aminborate. Entsprechende Beispiele, die keine Beschränkung darstellen sollen, sind Ammoniumborat, $NH_4HB_4O_7 \cdot 3H_2O$; Calciummetaborat, $Ca(BO_2)_2$; Calciummetaborat-hexahydrat, $Ca(BO_2)_2 \cdot 6H_2O$, Calciumtetraborat, $CaB_4O_7$; Lithiummetaborat, $LiBO_2$; Lithiumtetraborat, $Li_2B_4O_7 \cdot 5H_2O$; Kaliummetaborat, $K_2B_4O_7 \cdot 5H_2O$; Natriummetaborat, $Na_2B_2O_4$ und dessen Tetrahydrat, $Na_2B_2O_4 \cdot 4H_2O$; Natriumtetraborat, $Na_2B_4O_7$, dessen Pentahydrat, $Na_2B_4O_7 \cdot 5H_2O$ und dessen Decahydrat, $Na_2B_4O_7 \cdot 10H_2O$; Methylammoniumhydrogentetraborat, $NH_3CH_3HB_4O_7$; Dimethylammoniumhydrogentetraborat, $NH_2(CH_3)_2HB_4O_7$; und dergleichen.

Bei der Vernetzung kann auch Borsäure verwendet werden, sofern der pH-Wert der wässrigen Lösung auf mehr als 7 eingestellt wird.

Wird ein Boratsalz als Quelle für Boratanionen in der wässrigen Lösung verwendet, ist die Art der Kationen nicht kritisch. Zweckmässigerweise wird jedoch ein pharmakologisch verträgliches Kation verwendet. Dies erspart einen Waschvorgang, bei dem das vernetzte Material mit einer pharmakologisch verträglichen Base oder einem Salz zur Entfernung des unerwünschten Kations gewaschen wird.

Obgleich der genaue Reaktionsmechanismus, nach dem die Vernetzung des Polyvinylalkohols mit einem Borat bei einem pH-Wert über 7 stattfindet, nicht bekannt ist, wird angenommen, dass folgendermassen eine Didiolbildung zwischen benachbarten Polyvinylalkoholmolekülen stattfindet:

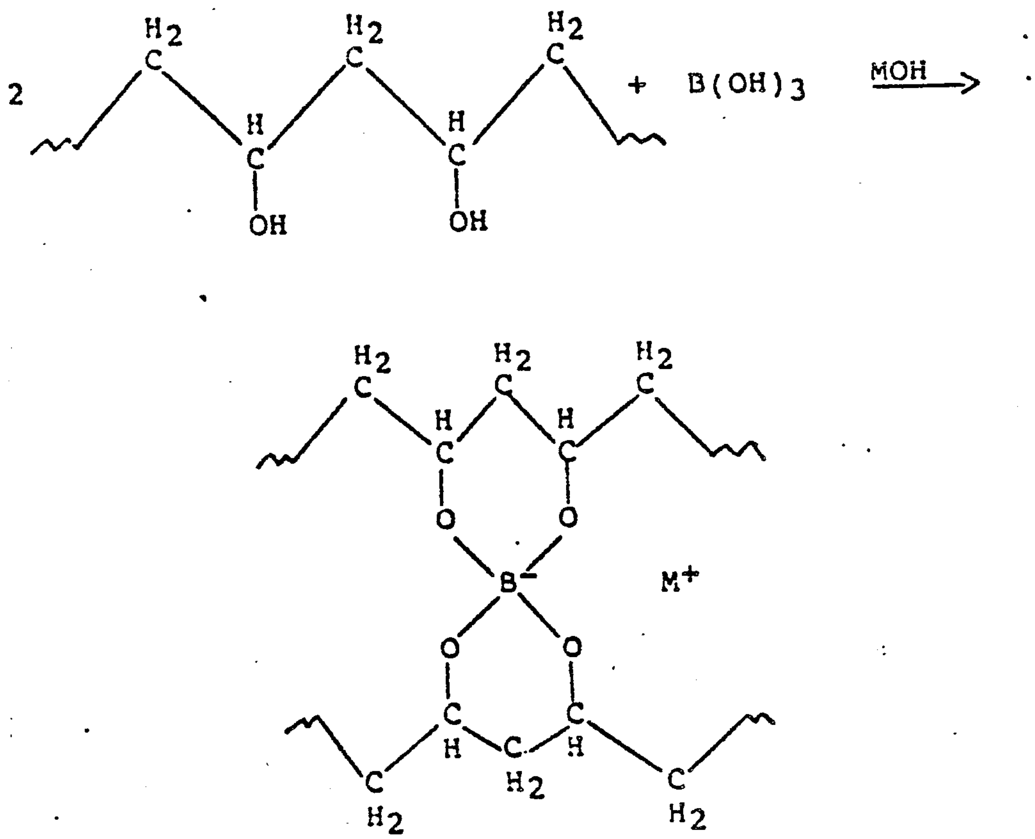


dabei bedeutet M ein Kation.

Unter sauren Bedingungen, d.h. bei einem pH-Wert unter 7 wird vermutlich nur der Monodiolkomplex gebildet, so dass die gewünschte Vernetzung nicht stattfindet.

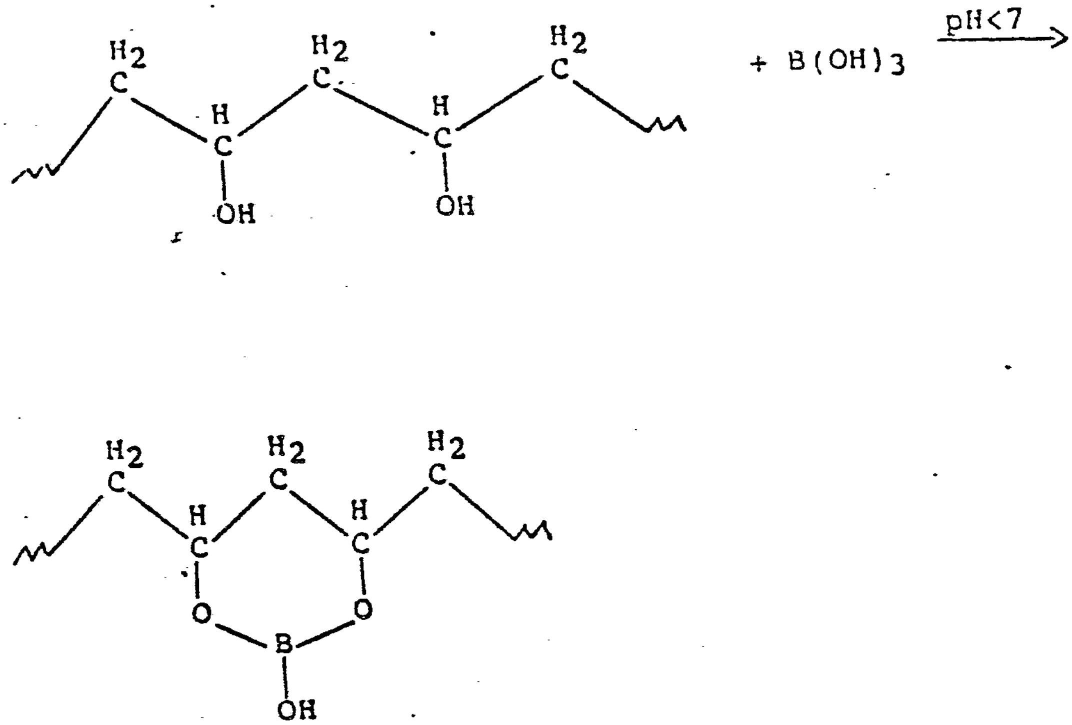


Die Menge des im vernetzten Polyvinylalkohol vorhandenen Borats, ausgedrückt in mg komplexiertes Bor pro g Polyvinylalkohol, liegt zweckmässigerweise im Bereich von etwa 0,5 bis 50, vorzugsweise von etwa 2 bis 35 und insbesondere von etwa 5 bis 25.

Die Menge des im vernetzten Polyvinylalkohol vorhandenen Bors soll ausreichen, um den Elastizitätsmodul des vernetzten Materials im Vergleich zum unvernetzten Polyvinylalkohol-Ausgangsmaterial zu erhöhen. Die optimale Bormenge, die zu einer wesentlichen Erhöhung des Elastizitätsmoduls führt, variiert natürlich bis zu einem gewissen Grad unter anderem in Abhängigkeit von der Molekulargewichtsverteilung und der Quellbarkeit des Polyvinylalkohols in Wasser. Die optimale Bormenge in einem bestimmten Polyvinylalkoholsubstrat kann leicht ermittelt werden, indem man die in Polyvinylalkoholproben vorhandenen Bormengen variiert und das Verhältnis von Bor in mg zu g Polyvinylalkohol gegen den Elastizitätsmodul in $kg/cm^2$ oder psi aufträgt.

Ein wesentlicher Überschuss von im Polyvinylalkoholsubstrat vernetzten Bor ist im allgemeinen unerwünscht, soweit er den Elast:

BAD ORIGINAL

zitätsmodul des Polyvinylalkohols nachteilig beeinflussen kann.

Die erfindungsgemässen mit Borat vernetzten Kontaktlinsen weisen im Vergleich zu Polyhydroxyäthylmethacrylat eine überlegene Sauerstoffpermeabilität auf. So besitzt vernetzter Polyvinylalkohol eine Permeabilität für gelösten Sauerstoff DK von etwa 20 x $10^{-10}$ bis 60 x $10^{-10}$ ($cm^3$(STP) cm/$cm^2$ sec cm HG) im Vergleich zu 8 x $10^{-10}$ bis 15 x $10^{-10}$ ($cm^3$ (STP) cm/$cm^2$ sec cm HG) für Polyhydroxyäthylmethacrylat.

In ähnlicher Weise ist die Zugfestigkeit der erfindungsgemässen mit Borat vernetzten Kontaktlinsen im Vergleich zu Linsen aus Polyhydroxyäthylmethacrylat weit überlegen. Beispielsweise weisen Materialien aus mit Borat vernetztem Polyvinylalkohol eine charakteristische Zugfestigkeit in gequollenem Zustand von etwa 100 bis 2000 psi (7,03 bis 141 kg/$cm^2$), bezogen auf die ursprüngliche Querschnittfläche des Materials, im Vergleich zu etwa 15 bis 30 psi (1,1 bis 2,1 kg/$cm^2$) für Polyhydroxyäthylmethacrylat auf.

Wichtig ist der Hinweis, dass die Permeabilität für gelösten Sauerstoff, DK, eine nur vom Material der Kontaktlinse abhängige Eigenschaft ist, während die Transmissibilität für gelösten Sauerstoff, DK/L, den tatsächlichen Sauerstofffluss pro Einheit der Differenz der Sauerstoffspannung (Partialdruck) durch eine Linse der Dicke L ist. Somit ist die letztgenannte Grösse wichtig, um festzustellen, ob eine bestimmte Linse fähig ist, den Sauerstoffbedarf der Hornhaut zu befriedigen. Im allgemeinen gilt bei gleichem Linsenmaterial, dass die Transmissibilität für gelösten Sauerstoff, DK/L, um so höher ist, je dünner die Linse ist.

Aufgrund der günstigen Eigenschaftenkombination der erfindungsgemässen Materialien in bezug auf Zugfestigkeit, Elastizitätsmodul und hohe Sauerstoffpermeabilität können die Kontaktlinsen vorteilhafterweise entweder als ultradünne oder als relativ dicke Linsen hergestellt werden. Die ultradünnen Kontaktlinsen besitzen eine äusserst hohe Sauerstofftransmissibilität, die im Vergleich zum Sauerstoffbedarf der Hornhaut einen Sauerstoffüberschuss gewährleistet, so dass diese Linsen für ständiges Tragen geeignet sind, aber immer noch eine beträchtlich überlegene mechanische Festigkeit aufweisen. Derartige Linsen haben beispielsweise im Zentrum eine Dicke von etwa 0,010 bis etwa 0,1 mm. Die relativ dicken Linsen, die noch eine angemessene Sauerstofftransmissibilität besitzen, weisen beispielsweise in der Mitte eine Dicke von etwa 0,2 bis etwa 0,5 mm auf.

Ferner sind die Linsen aus mit Borat vernetztem Polyvinylalkoholmaterialien aufgrund ihrer ausgezeichneten optischen Klarheit, ihrer Weichheit und ihrer totalen Oberflächenbenetzbarkeit durch Tränenflüssigkeit (charakterisiert durch einen kleinen Kontaktwinkel) besonders geeignet als weiche Kontaktlinsen, die für die Patienten bequem zu tragen sind und eine gute optische Schärfe und die erforderliche visuelle Korrektur gewährleisten.

Somit besitzen die erfindungsgemässen Kontaktlinsen vorteilhafterweise eine Dicke in der Linsenmitte von etwa 0,010 bis etwa 0,5 mm. Im allgemeinen besitzen die Kontaktlinsen vorzugsweise eine Dicke in der Mitte von etwa 0,03 bis 0,25 mm. Der Durchmesser der Erfindungsgemässen Kontaktlinsen kann etwa 6 bis 20 mm und vorzugsweise etwa 8 bis 16 mm betragen.

Die erfindungsgemässen Materialien aus mit Borat vernetztem Polyvinylalkohol sind im Vergleich zu Polyhydroxyäthylmethacrylat auch in bezug auf Dehnungseigenschaften und Elastizitätsmodul überlegen.

Die erfindungsgemässen Materialien aus mit Borat vernetztem Polyvinylalkohol besitzen im Vergleich zu nicht vernetztem Polyvinylalkohol eine erhöhte Beständigkeit gegen viskoelastische Verformungen und sind infolgedessen im wesentlichen frei von sogenanntem "kalten Fluss" oder Kriecherscheinungen, die im allgemeinen bei amorphen, thermoplastischen Linsenmaterialien

auftreten. Da die erfindungsgemässen Materialien aus mit Borat versetztem Polyvinylalkohol im wesentlichen kein Kriechen oder "kalten Fluss" aufweisen, sind sie gegen eine permanente und beträchtliche Verformung aufgrund von Augenlidbewegungen oder aufgrund von Linsenreinigung beständig.

Überraschenderweise ist die bei den Kontaktlinsenmaterialien aus mit Borat vernetztem Polyvinylalkohol im Vergleich zu unbehandeltem (nicht-vernetztem) Polyvinylalkohol erzielte Erhöhung des Elastizitätsmoduls verbunden mit einer Steigerung der Zugfestigkeit und der Bruchdehnung von boratvernetzten Linsen.

Die Kontaktlinsen aus vernetztem Polyvinylalkohol enthalten in gequollenem Anwendungszustand etwa 30 bis 97 Prozent Wasser, bezogen auf das Gewicht des gequollenen Materials und vorzugsweise etwa 45 bis 95 Gewichtsprozent Wasser.

Die erfindungsgemässen Kontaktlinsen lassen sich vorteilhafterweise nach verschiedenen Methoden herstellen.

Gemäss einer Ausführungsform (Methode A) wird eine aus mit Borat vernetztem Polyvinylalkohol bestehende Linse folgendermassen hergestellt:

1) Polyvinylalkohol mit einem Gewichtsmittel des Molekulargewichts von mindestens etwa 6000 und eine ausreichende Menge Wasser werden in Gegenwart oder Abwesenheit eines Weichmachers bei Temperaturen von etwa 50 bis 100°C vermischt, wobei aus dem Gemisch eine geschmolzene flüssige Masse entsteht, die in der Lage ist, bei Temperaturen unter etwa 50°C zu einer im wesentlichen die Form behaltenden wässrigen Gel zu erstarren.

2) Die geschmolzene Masse wird in einen Formhohlraum gegeben, der eine konvexe und eine konkave Oberfläche aufweist,

die im wesentlichen der Form einer Kontaktlinse entsprechen.

3) Die Form wird unter etwa 50 °C gekühlt, wodurch die geschmolzene Masse zu einem im wesentlichen die Form behaltenden wässrigen Polyvinylalkoholgel in Form einer Kontaktlinse erstarrt.

4) Die im wesentlichen die Form behaltende Kontaktlinse aus wässrigem Polyvinylalkoholgel wird aus der Form entfernt.

5) Ein Borat wird in einer zur Erhöhung des Elastizitätsmoduls des Polyvinalalkohols ausreichenden Menge mit der im wesentlichen die Form behaltenden Linse aus wässrigem Polyvinylalkoholgel in einem wässrigen Medium bei einem pH-Wert über 7 umgesetzt, wodurch eine Kontaktlinse aus mit Borat vernetztem Polyvinylalkoholkomplex gebildet wird.

6) Die Kontaktlinse aus mit Borat vernetztem Polyvinylalkohol wird entnommen.

Bevorzugte Weichmacher sind Polyole, wie Äthylenglykol, Propylenglykol, Glycerin und Äthylenglykol, Mono- und Di-methyläther, Tetrahydrofuran, Natriumthiocyanat, Ammoniumthiocyanat, Äthanolaminsalze, wie Triäthanolaminacetal und Triäthanolaminhydrochlorid, Formamid, Dimethylformamid und Dimethylsulfoxid.

Glycerin und Propylenglykol sind als Weichmacher besonders bevorzugt. Wird ein Polyol-Weichmacher, wie Äthylenglykol, Propylenglykol oder Glycerin, bei der vorerwähnten Vermischungsstufe 1) einverleibt, so wird der Weichmacher zweckmässigerweise aus dem wässrigen Gel von Stufe 4) durch Waschen der Polyvinylalkohol-Linse mit Wasser entfernt, bevor die Vernetzung des Polyvinylalkohols mit dem Borat in Stufe 5) erfolgt.

Gemäss einer Ausführungsform des Verfahrens A liegt das Borat von Stufe 5) der vorgenannten Reaktionsfolge in Form eines Boratsalzes vor. Bevorzugte Salze sind Alkalimetall-, Erdalkalimetall-, Amin- und Ammoniumsalze. Besonders bevorzugt wird Natriumtetraborat.

Gemäss einer anderen Ausführungsform des Verfahrens A wird das wässrige Medium von Stufe 5) mit Borsäure versetzt und das Medium durch entsprechenden Basenzusatz auf einen pH-Wert über 7 eingestellt. Bevorzugte Basen sind Alkalimetallhydroxide, Ammoniumhydroxid, Erdalkalimetallhydroxide und dergleichen. Besonders bevorzugt sind Natriumhydroxid, Kaliumhydroxid und Ammoniumhydroxid.

Gemäss einer weiteren Ausführungsform des Verfahrens A wird das Medium aus Polyvinylalkohol und Wasser in Stufe 1) mit Borsäure versetzt, wobei ein im wesentlichen nicht-vernetzter Monodiol-Borat-Komplex gebildet wird. In Stufe 5) wird sodann eine Base in einer zur Erhöhung des pH-Werts auf über 7 ausreichenden Menge zugesetzt, wodurch der mit Borat vernetzte Komplex mit Polyvinylalkohol gebildet wird. Bei dieser Ausführungsform wird der Vermischungsvorgang von Stufe 1) im wesentlichen in Abwesenheit eines Polyol-Weichmachers, wie Äthylenglykol, Propylenglykol oder Glycerin, durchgeführt, da diese Polyole zur Reaktion mit Borsäure neigen.

Gemäss einer anderen Ausführungsform (Verfahren B) werden die Linsen aus mit Borat vernetztem Polyvinylalkohol folgendermassen hergestellt:

1) Polyvinylalkohol mit einem Gewichtsmittel des Molekulargewichts von mindestens etwa 6000 wird in Wasser in Gegenwart oder Abwesenheit eines Weichmachers bei erhöhten Temperaturen gelöst, wobei eine homogene Lösung entsteht, die in der Lage ist, beim Trocknen zu einem im wesentlichen die Form behaltenden Gel zu erstarren.

2) Die homogene Lösung wird in eine Kontaktlinsenform gebracht, die eine konkave, vorzugsweise stetig gekrümmte, feste Auflagefläche aufweist, die gleich gross oder grösser als die

darin zu bildende Linse ist. Die Form wird sodann um eine zur Auflagefläche transversale Achse mit so hoher Geschwindigkeit gedreht, dass die homogene Lösung unter Einwirkung der Zentrifugalkraft radial nach aussen verlagert wird. Dabei wird das Wasser aus der Lösung zur Trocknung des Gemisches so lange abgedampft, bis ein im wesentlichen die Form behaltendes Gel aus Polyvinylalkohol, das im wesentlichen die Form einer Kontaktlinse aufweist, gebildet wird.

3) Das im wesentlichen die Form behaltende Gel aus Polyvinylalkohol in Form einer Kontaktlinse wird aus der Form entnommen.

4) Ein Borat wird in einer zur Erhöhung des Elastizitätsmoduls des Polyvinylalkohols ausreichenden Menge mit der Linse aus dem im wesentlichen die Form behaltenden Gel aus Polyvinylalkohol in einem wässrigen Medium über einem pH-Wert von 7 umgesetzt, wodurch eine Kontaktlinse aus einem mit Borat vernetztem Polyvinylalkoholkomplex entsteht.

5) Die Kontaktlinse aus mit Borat vernetztem Polyvinylalkohol wird entnommen.

Als Weichmacher können die vorstehend beim Verfahren A genannten Weichmacher verwendet werden. Wird beim Verfahren B ein Polyol-Weichmacher, wie Propylenglykol, Äthylenglykol oder Glycerin, in der Lösungsstufe 1) einverleibt, so wird er zweckmässigerweise durch Waschen der Linse mit Wasser nach deren Entfernung aus der Form vor der Vernetzungsstufe 5) entfernt.

In Stufe 1) von Verfahren B wird die Lösung des Polyvinylalkohols im Gemisch aus Weichmacher und Wasser zweckmässigerweise durch Erhitzen von Weichmacher, Wasser und Polyvinylalkohol auf erhöhte Temperaturen von 50 bis 100°C erreicht.

Vorzugsweise beträgt die Menge des Weichmachers, falls vorhanden, etwa 0,01 bis 30 Gewichtsprozent, bezogen auf das Polymerisatgewicht und insbesondere 0,01 bis 15 Gewichtsprozent,in den Verfahren A und B.

Die homogene Lösung von Stufe 1) von Verfahren B enthält zweckmässigerweise 5 bis 30 Gewichtsprozent Polyvinylalkohol und vorzugsweise 10 bis 20 Gewichtsprozent, bezogen auf das Gewicht der Lösung.

Wie in Verfahren A kann in Stufe 1) von Verfahren B Borsäure zur Bildung eines nicht-vernetzten Monodiol-Komplexes zugesetzt werden, der in Stufe 4) in den mit Borat vernetzten Polyvinylalkohol-Komplex durch Erhöhung des pH-Werts über 7 umgewandelt wird. Es kann auch Borsäure zu der wässrigen Lösung von Stufe 4) gegeben werden und das wässrige Medium durch Zusatz einer Base auf einen pH-Wert über 7 eingestellt werden oder das Borat von Stufe 4) kann in Form eines Boratsalzes vorliegen, wie in Verfahren A dargelegt.

Gemäss einer weiteren Ausführungsform (Verfahren C) wird die Linse aus mit Borat vernetztem Polyvinylalkohol folgendermassen hergestellt:

1) Ein Polyvinylalkohol-Film, dessen Polyvinylalkohol ein Gewichtsmittel des Molekulargewichts von mindestens etwa 6000 aufweist und gegebenenfalls einen Weichmacher enthält, wird auf eine zuerst vorerhitzte, Form mit einer konvexen oder konkaven Oberfläche, entsprechend der Form einer Oberfläche einer Kontaktlinse, gelegt, wodurch der Film erweicht wird.

2) Daraus wird mit einer zweiten schneidenden und formgebenden Form mit einer konkaven oder konvexen Oberfläche, entsprechend der Form der zweiten Oberfläche der Kontaktlinse, Linsenmaterial so ausgestanzt, dass die erste Form und die zweite Form zusammen einen Formhohlraum bilden, der Polyvinylalkohol enthält, dessen Form im wesentlichen der Kontaktlinse entspricht.

3) Die verbundenen Formen werden ausreichend gekühlt, um den Polyvinylalkohol im Formhohlraum zu einem im wesentlichen die Form behaltenden Körper in Form einer Kontaktlinse zu härten.

4) Die Formen werden getrennt und der im wesentlichen die Form behaltende Körper aus Polyvinylalkohol in Form der Kontaktlinse wird entnommen.

5) Ein Borat wird in einer zur Erhöhung des Elastizitätsmoduls des Polyvinylalkohols ausreichenden Menge mit dem im wesentlichen die Form behaltenden Körper aus Polyvinylalkohol in einem wässrigen Medium mit einem pH-Wert über 7 umgesetzt, wodurch eine Kontaktlinse aus einem mit Borat vernetztem Polyvinylalkohol-Komplex gebildet wird.

6) Die Kontaktlinse aus mit Borat vernetztem Polyvinylalkohol wird entnommen.

Beim Verfahren C kann der Polyvinylalkoholfilm nach an sich üblichen Verfahren hergestellt werden.

Beispielsweise kann der Polyvinylalkoholfilm aus einer wässrigen Lösung gegebenenfalls zusammen mit einem Weichmacher durch Abdampfen gegossen werden.

Gegebenenfalls können Weichmacher, beispielsweise die beim Verfahren A erwähnten Weichmacher, als Bestandteil im Polyvinylalkoholfilm von Stufe 1) des Verfahrens C in einer Menge von 0,01 bis 30 Gewichtsprozent und vorzugsweise von etwa 0,01 bis 15 Gewichtsprozent, bezogen auf das Gewicht des Polyvinylalkohols, verwendet werden. Bei Verwendung eines Weichmachers in Stufe 1) von Verfahren C kann dieser aus der in Stufe 4) erhaltenen geformten Kontaktlinse vor der Umsetzung in Stufe 5) entfernt werden. Eine weitgehende Entfernung des Weichmachers ist besonders erwünscht, wenn es sich um einen Polyol-Weichmacher, wie Äthylenglykol, Propylenglykol oder Glycerin handelt. Diese Entfernung wird erreicht, indem man die in Stufe 4) erhaltene geformte Kontaktlinse mit Wasser wäscht.

Gemäss einer Ausführungsform des Verfahrens C kann dem Polyvinylalkoholfilm von Stufe 1) Borsäure einverleibt werden, beispielsweise durch Giessen des Films aus einer wässrigen Polyvinylalkohollösung, die die gewünschte Menge an Borsäure enthält, wobei im wesentlichen in Abwesenheit eines Polyol-Weichmachers gearbeitet wird. Bei dieser Ausführungsform liegt die Borsäure im Film von Stufe 1) als im wesentlichen nicht-vernetzter Monodiol-Borat-Komplex vor. In Stufe 5) wird dann eine Base in einer zur Erhöhung des pH-Werts über 7 ausreichenden Menge zugesetzt, wodurch der mit Borat vernetzte Komplex mit Polyvinylalkohol gebildet wird. Eine andere Möglichkeit besteht darin, Borsäure zum wässrigen Medium von Stufe 5) zu geben und das wässrige Medium durch Zusatz einer Base auf einen pH-Wert über 7 einzustellen oder das Borat von Stufe 5) kann in Form eines Boratsalzes vorliegen, wie beim Verfahren A erläutert.

Nach den vorstehend erläuterten Verfahren A, B und C können vorteilhafterweise sphärische, torische und polyfokale Linsen zum Einsatz am menschlichen Auge hergestellt werden, einschliesslich bifokale Kontaktlinsen mit Stärken von etwa -20 bis etwa +20 Dioptrien. So kann beispielsweise die insgesamt konkave Oberfläche der Formen der Verfahren A, B und C planare oder konvexe Bereiche aufweisen, wenn eine insgesamt negative Dioptrie oder mehrfache Dioptrien erwünscht sind.

Die erfindungsgemässen mit Borat vernetzten Polyvinylalkohol-Linsen werden unter Anwendungsbedingungen mit einer wässrigen Flüssigkeit gequollen. Dies ist bei der Festlegung der Gestalt der Linsenformen zu berücksichtigen. Somit wird die Gestalt der Linsenformen unter Berücksichtigung des Grads der Quellung berechnet, die nach der Formung der Linse erfolgt, beispielsweise bei der anschliessenden Behandlung mit einem wässrigen Medium, wie in

dem Medium, in dem die Boratvernetzung stattfindet. Da die gequollene Linse in bezug auf die Dichte des vernetzten Polyvinylalkohols im wesentlichen gleichmässig ist, ist die Berechnung einfach und abhängig vom prozentualen Anteil des Wassers in der Kontaktlinse in gequollenem Anwendungszustand im Vergleich zur Wassermenge in der in der Form hergestellten Linse.

Für den Fachmann ist es klar, dass beim Einbringen des Borats in die Boratumsetzungsstufe der Verfahren A, B und C dieses aus dem wässrigen Medium in die gequollene Linse diffundiert und sich schliesslich eine relativ gleichmässige Vernetzungsdichte im gesamten gequollenen Linsenmedium ergibt. Ist das Borat im Polyvinylalkohol vor der Vernetzung als Monodiol-Komplex vorhanden, so ist es im wesentlichen über das gesamte Linsenmedium gleichmässig verteilt.

Die bevorzugten und besonders bevorzugten Weichmacher, Basen und Boratsalze der Verfahren B und C sind die gleichen, die beim Verfahren A erläutert wurden.

Zusätzlich zu den verschiedenen vorstehend erwähnten vorteilhaften Eigenschaften zeichnen sich die erfindungsgemässen Kontaktlinsen aus mit Borat vernetztem Polyvinylalkohol auch durch ihre unerwartet geringe Extraktionsgeschwindigkeit des Borats aus den Linsen unter Anwendungsbedingungen aus. Dies führt dazu, dass die Linsen eine bemerkenswerte Stabilität aufweisen.

Ausserdem weisen die erfindungsgemässen Linsen im Gegensatz zu Linsen aus nicht-vernetztem Polyvinylalkohol eine hohe Beständigkeit gegen Bakterienbefall auf.

Die erfindungsgemässen Kontaktlinsen können für den Versand in einer isotonen Lösung vom pH-Wert etwa 7 oder gegebenenenfalls in einer wässrigen Boratlösung gelagert werden.

Die Beispiele erläutern die Erfindung und sollen keine Beschränkung darstellen. Sämtliche Teilangaben beziehen sich auf das Gewicht, sofern nichts anderes angegeben ist.

Die Beispiele 1 bis 3 erläutern Verfahren zur Herstellung des erfindungsgemässen weichen Kontaktlinsensystems.

Beispiel 1

2 Teile Elvanol 71-30 (99 bis 100 Molprozent hydrolysierter Polyvinylalkohol mit einem Gewichtsmittel des Molekulargewichts von 116 000 und einem Zahlenmittel des Molekulargewichts von 40 000, hergestellt von DuPont) werden mit 2 Teilen Glycerin und 4 Teilen destilliertem Wasser unter Bildung einer Aufschlämmung mit einem reduzierten Schmelzpunkt von etwa 90°C vermischt. Die Aufschlämmung wird in einem Trockenschrank auf 100°C erwärmt, bis es den geschmolzenen Zustand erreicht. Etwa 0,1 g der geschmolzenen Masse werden in die Vertiefung des konkaven Teils einer linsenartig gestalteten Form, die einen Kurvenradius von 0,6 cm aufweist und auf 100°C vorerwärmt ist, gegeben. Anschliessend wird der dazupassende konvexe Teil der Form, die einen Kurvenradius von 0,71 cm aufweist und ebenfalls auf 100°C vorerwärmt ist, oben auf die Vertiefung gelegt und mit einer Laboratoriumspresse aufgepresst. Sodann kühlt man die Form allmählich auf Raumtemperatur ab und lässt etwa 10 Stunden vor dem Öffnen der Form härten, um eine vollständige Gelbildung und Linsenbildung zu erreichen. Anschliessend wird der linsenförmige Körper über Nacht in destilliertem Wasser gewaschen, um restliches Glycerin zu entfernen. Hierauf wird die gequollene Linse in 0,5-prozentiger wässriger Natriumboratlösung vom pH-Wert 9,2 äquilibriert, um die Vernetzung zu erreichen. Die vernetzte Linse wird sodann in isotoner Kochsalzlösung (pH-Wert 7,0) gelagert. Auf diese Weise erhält man eine weiche, elastische, tränenbeständige und optisch klare Linse mit einem Gleichgewichtswassergehalt von 79,72 Gewichtsprozent.

Beispiel 2

Ein Polyvinylalkoholfilm von 0,038 cm Dicke in trockenem Zustand mit einem Gehalt an 3,4 Prozent Glycerin als Weichmacher wird aus einer 18-prozentigen wässrigen Lösung von Elvanol 71-30, die ursprünglich 0,6 Prozent Glycerin enthält, mit Messer-

auftrag gegossen und anschliessend 2 Tage bei 23°C und 40 Prozent relativer Feuchtigkeit getrocknet.

Der auf diese Weise gebildete transparente und thermoplastische Polyvinylalkoholfilm wird etwa 10 Sekunden zwischen den beiden Formteilen von Beispiel 1 mit einer Laboratoriumspresse gepresst, mit der Abänderung, dass das dazupassende konvexe Teil der Form einen Kurvenradius von etwa 0,635 cm aufweist und dass die gesamte Form auf 180°C vorerwärmt ist. Auf diese Weise wird ein linsenförmiger Körper gebildet und vom Film getrennt. Die geformte Linse wird sodann aus der Form entfernt und auf Raumtemperatur abgekühlt.

Anschliessend wird die geformte Linse über Nacht in destilliertem Wasser gewaschen, um das restliche Glycerin zu entfernen. Hierauf wird die gequollene Linse in 0,5-prozentiger wässriger Natriumboratlösung vom pH-Wert 9,2 äquilibriert, um die Vernetzung zu vervollständigen. Die Linse wird schliesslich in isotoner Kochsalzlösung (pH-Wert 7,0) gelagert. Man erhält eine weiche, elastische, tränenbeständige und optisch klare Linse mit einem Gleichgewichtswassergehalt von 48,85 Gewichtsprozent.

Beispiel 3

Eine 10-prozentige wässrige Polyvinylalkohollösung mit einem Glyceringehalt von 0,34 Prozent wird hergestellt, indem man entsprechende Mengen von Elvanol 71-30 und Glycerin in Wasser von 100°C löst. Die erhaltene Lösung weist eine Brookfield-Viskosität von etwa 1500 Cp bei Raumtemperatur (23°C) auf.

Etwa 43 mg dieser Lösung werden in eine Glasform mit einer sphärischen, konkaven, festen Auflagefläche mit einem Kurvenradius von 0,5 cm gegeben. Die Form, deren Segmenthöhe 0,4 cm beträgt, wird sodann an einem Futter befestigt und um die zur Auflagefläche transversale Achse mit einer Geschwindigkeit von 350 Umdrehungen pro Minute (U/min) unter Verwendung eines Regelmotors gedreht. Durch diesen Drehvorgang erfolgt nicht nur die Formgebung der Linse durch die Zentrifugalkraft, sondern

es entsteht auch ein Konvektionsstrom der umgebenden Luft, wodurch die Trocknung der Linse erleichtert wird. Nach 4-stündiger Trocknung bei 350 U/min bei Raumbedingungen (23°C und 40 Prozent relative Feuchtigkeit) ist der linsenförmige Formkörper berührungstrocken.

Anschliessend wird die die trockene Linse enthaltende Form in destilliertes Wasser von 23°C getaucht, wobei die Linse quillt und so aus der Form entnommen werden kann. Die gequollene Linse wird sodann über Nacht in destilliertem Wasser gewaschen, um restliches Glycerin zu entfernen. Anschliessend wird sie in 0,5-prozentiger wässriger Natriumboratlösung vom pH-Wert 9,2 äquilibriert, um die Vernetzung zu vervollständigen. Schliesslich wird die vernetzte Linse in isotoner Kochsalzlösung (pH-Wert 7,0) gelagert. Man erhält eine weiche, elastische, tränenbeständige und optisch klare Linse mit einem Gleichgewichtswassergehalt von 88,3 Gewichtsprozent.

Beispiele 4 bis 9

Eine Reihe von Linsen aus mit Borat vernetztem Polyvinylalkohol wird gemäss Beispiel 3 mit der Abänderung hergestellt, dass die Giesslösung nicht mit Glycerin versetzt wird und dass Natriumboratlösungen mit einer Konzentration bis zu 4 Prozent verwendet werden, um einen Bereich von internen Boratvernetzungskonzentrationen zu erhalten. Die Massen der einzelnen Linsen werden auf ihre Permeabilität für gelösten Sauerstoff bei 34°C, der Augentemperatur, unter Verwendung eines polarographischen Sensors in einer mit Luft gesättigten wässrigen Umgebung getestet. Die mechanischen Eigenschaften in feuchtem Zustand der gequollenen Linsenmassen, einschliesslich Zugfestigkeit, Bruchdehnung und Elastizitätsmodul, werden mit einem Instron-Testgerät Modell 1123 bestimmt. Die Ergebnisse sind in Tabelle I zusammengestellt.

Tabelle I

| Beispiel Nr. | Innere Borkonzentration im trockenen PVA[2] (mg/g) | Wassergehalt % | Permeabilität für gelösten Sauerstoff bei 34°C $\times 10^{-10}$ $\frac{cm^3 (STP)\ cm}{cm^2\ sec\ cm\ Hg}$ | Zugfestigkeit (cm/kg$^2$(psi) | Bruchdehnung % | Elastizitätsmodul (kg/cm$^2$(psi)) |
|---|---|---|---|---|---|---|
| 4 | 0 | 82,72 | 44,71 | 8,29 (117,9) | 240 | 2,38 (33,8) |
| 5 | 9,97 | 89,61 | 45,24 | 26,8 (380,9) | 462 | 4,30 (61,1) |
| 6 | 20,14 | 92,15 | 34,88 | 17,1 (243,8) | 294,3 | 4,82 (68,6) |
| 7 | 34,76 | 92,02 | 30,65 | 11,1 (158,5) | 260,8 | 2,50 (35,6) |
| 8 | 58,26 | 91,78 | - | 6,00 (85,4) | 209,5 | 2,10 (29,8) |
| 9 | Poly-HEMA[1] (Kontrolle) | 35,88 | 10,28 | 1,16 (16,5) | 40 | 3,75 (53,4) |

1 Poly-(2-hydroxyäthylmethacrylat) vernetzt mit Äthylenglykoldimethacrylat

2 Polyvinylalkohol

Die in Tabelle I wiedergegebenen Untersuchungsergebnisse zeigen, dass bei den erfindungsgemässen Materialien aus mit Borat vernetztem Polyvinylalkohol im Vergleich zu herkömmlichem Kontaktlinsenmaterial aus Poly-HEMA in vorteilhafter Weise Zugfestigkeit, Bruchdehnung und Elastizitätsmodul erhöht sind, wobei eine hohe Sauerstoffpermeabilität gewährleistet ist.

Beispiel 10

Eine 10-prozentige wässrige Polyvinylalkohollösung mit einem Gehalt an etwa 1 Prozent Borsäure wird hergestellt, indem man entsprechende Mengen an Elvanol 71-30 und Borsäure in Wasser von 100°C löst. Die erhaltene Lösung weist eine Brookfield-Viskosität von etwa 1600 Cp bei 23°C auf.

Etwa 40 mg dieser Lösung werden in die Kontaktlinsen-Glasform von Beispiel 3 gegeben und bei 300 U/min gemäss dem Verfahren und den Bedingungen von Beispiel 3 getrocknet.

Anschliessend wird die die trockene Linse enthaltende Form in 0,01 m NaOH-Lösung getaucht,um die Borsäure in situ in Natriumborat überzuführen und die gewünschte Vernetzung zu erreichen. Sodann wird die vernetzte Linse entnommen und in isotoner Kochsalzlösung aufbewahrt. Man erhält eine weiche, elastische, tränenbeständige und optisch klare Linse mit einem Gleichgewichtswassergehalt von 90,0 Gewichtsprozent.

## Patentansprüche

1. Optisch klare, weiche Kontaktlinse aus gequollenem Polyvinylalkohol mit einem Gewichtsmittel des Molekulargewichts von mindestens etwa 6000, der mit einem Borat in einer zur Erhöhung des Elastizitätsmoduls ausreichenden Menge vernetzt ist, wobei die Linse in der durch die Tränenflüssigkeit gebildeten Umgebung im wesentlichen unlöslich ist.

2. Kontaktlinse nach Anspruch 1, dadurch gekennzeichnet, dass der Polyvinylalkohol ein Gewichtsmittel des Molekulargewichts von mindestens 10 000 aufweist.

3. Kontaktlinse nach Anspruch 1, dadurch gekennzeichnet, dass die Menge des im vernetzten Polyvinylalkohol vorhandenen Borats etwa 0,5 bis 50 mg komplexiertes Bor pro g Polyvinylalkohol beträgt.

4. Kontaktlinse nach Anspruch 1, dadurch gekennzeichnet, dass die Linse etwa 30 bis 97 Gewichtsprozent Wasser, bezogen auf das Gewicht der geqiollenen Linse aus mit Borat vernetztem Polyvinylalkohol, enthält.

5. Verfahren zur Herstellung der Kontaktlinse aus mit Borat vernetztem Polyvinylalkohol nach Anspruch 1, dadurch gekennzeichnet, dass man
   1) Polyvinylalkohol mit einem Gewichtsmittel des Molekulargewichts von mindestens etwa 6000 und eine ausreichende Menge Wasser in Gegenwart oder Abwesenheit eines Weichmachers bei Temperaturen von 50 bis 100 °C vermischt, wobei das Gemisch in eine geschmolzene flüssige Masse überführt wird, die in der Lage ist, bei Temperaturen unter etwa 50 °C zu einem die Form im wesentlichen behaltenden wässrigen Gel zu erstarren,

   2) die geschmolzene Masse in einen Formhohlraum mit einer konvexen Oberfläche und einer konkaven Oberfläche, entsprechend im wesentlichen der Gestalt einer Kontaktlinse, bringt,

3) die Form unter etwa 50 $^{\circ}C$ abkühlt, um die geschmolzene Masse zu einem die Form im wesentlichen behaltenden wässrigen Gel aus Polyvinylalkohol in Gestalt der Kontaktlinse zu verfestigen,

4) die Kontaktlinse aus dem die Form im wesentlichen behaltenden wässrigen Polyvinylalkoholgel aus der Form entnimmt,

5) ein Borat in einer zur Erhöhung des Elastizitätsmoduls des Polyvinalalkohols ausreichenden Menge mit der Linse aus dem die Form im wesentlichen behaltenden wässrigen Polyvinylalkoholgel in einem wässrigen Medium mit einem pH-Wert über 7 umsetzt, wodurch eine Kontaktlinse aus mit einem Borat vernetztem Polyvinylalkohol-Komplex gebildet wird, und

6) die Kontaktlinse aus mit Borat vernetztem Polyvinylalkohol entnimmt.

6. Verfahren nach Anspruch 5, dadurch gekennzeichnet, dass man als Weichmacher Äthylenglykol, Propylenglykol, Glycerin, Äthylenglykolmonomethyläther, Äthylenglykoldimethyläther, Tetrahydrofuran, Natriumthiocyanat, Ammoniumthiocyanat, Äthanolaminsalze, Formamid, Dimethylformamid oder Dimethylsulfoxid verwendet.

7. Verfahren nach Anspruch 5, dadurch gekennzeichnet, dass man als Weichmacher Äthylenglykol, Propylenglykol oder Glycerin verwendet, das bei der Vermischungsstufe 1) zugesetzt und aus dem wässrigen Gel von Stufe 4) durch Waschen der Polyvinylalkohol-Linse mit Wasser vor der Vernetzung des Polyvinylalkohols mit dem Borat in Stufe 5) entfernt wird.

8. Verfahren nach Anspruch 5, dadurch gekennzeichnet, dass das Borat von Stufe 5) in Form eines Alkalimetall-, Erdalkalimetall-, Amin- oder Ammoniumboratsvorliegt.

9. Verfahren nach Anspruch 8, dadurch gekennzeichnet, dass es sich beim Borat um Natriumtetraborat handelt.

10. Verfahren nach Anspruch 5, dadurch gekennzeichnet, dass dem wässrigen Medium von Stufe 5) Borsäure zugesetzt wird und das Medium durch Zusatz einer Base auf einen pH-Wert über 7 eingestellt wird.

11. Verfahren nach Anspruch 5, dadurch gekennzeichnet, dass das Medium aus Polyvinylalkohol und Wasser von Stufe 1) mit Borsäure im wesentlichen in Abwesenheit eines Polyol-Weichmachers versetzt wird und das wässrige Medium in Stufe 5) mit einer Base in einer Menge, die zur Erhöhung des pH-Werts über 7 ausreicht, versetzt wird.

12. Verfahren nach Anspruch 7, dadurch gekennzeichnet, dass der Gewichtsanteil des Weichmachers etwa 0,01 bis 70 Gewichtsprozent, bezogen auf das Gesamtgewicht aus Weichmacher und Polyvinylalkohol, beträgt.

13. Verfahren zur Herstellung der Linse aus mit Borat vernetztem Polyvinylalkohol nach Anspruch 1, dadurch gekennzeichnet, dass man

1) Polyvinylalkohol mit einem Gewichtsmittel des Molekulargewichts von mindestens etwa 6000 in Wasser in Gegenwart oder Abwesenheit eines Weichmachers bei erhöhten Temperaturen unter Bildung einer homogenen Lösung löst, die in der Lage ist, beim Trocknen zu einem im wesentlichen die Form behaltenden Gel zu erstarren,

2) die homogene Lösung in eine Kontaktlinsenform mit einer konkaven, nach oben gerichteten, festen Auflagefläche in

einer zur Bildung der Linse ausreichenden Menge oder im Überschuss hierzu bringt, die Form um eine zur Auflagefläche senkrechte Achse mit ausreichender Geschwindigkeit, dass unter Einwirkung der Zentrifugalkraft eine radiale Verlagerung der homogenen Flüssigkeit nach aussen stattfindet, wobei das Wasser aus der Lösung verdampft, ausreichend lange dreht, dass das Gemisch zu einem im wesentlichen die Form behaltenden Gel aus Polyvinylalkohol, das im wesentlichen die Gestalt einer Kontaktlinse aufweist, trocknet,

3) das im wesentlichen die Form behaltende Gel aus Polyvinylalkohol mit der Gestalt einer Kontaktlinse aus der Form entnimmt,

4) ein Borat in einer zur Erhöhung des Elastizitätsmoduls des Polyvinylalkohols ausreichenden Menge mit der Linse aus dem im wesentlichen die Form behaltenden Polyvinylalkoholgel in einem wässrigen Medium mit einem pH-Wert über 7 zur Bildung einer Kontaktlinse aus mit einem Borat vernetzten Polyvinylalkohol-Komplex umsetzt und

5) die Kontaktlinse aus mit Borat vernetztem Polyvinylalkohol entfernt.

14. Verfahren nach Anspruch 13, dadurch gekennzeichnet, dass der Gewichtsanteil des Weichmachers 0,01 bis 30 Gewichtsprozent, bezogen auf das Gewicht des Polyvinylalkohols beträgt.

15. Verfahren nach Anspruch 13, dadurch gekennzeichnet, dass die homogene Lösung von Stufe 1) etwa 5 bis 30 Gewichtsprozent Polyvinylalkohol, bezogen auf das Gewicht der Lösung, enthält.

16. Verfahren zur Herstellung der Linse aus mit Borat vernetztem Polyvinylalkohol nach Anspruch 1, dadurch gekennzeichnet, dass man

1) einen Polyvinylalkoholfilm, dessen Polyvinylalkohol ein Gewichtsmittel des Molekulargewichts von mindestens etwa 6000 aufweist, in Gegenwart oder Abwesenheit eines Weichmachers auf eine erste vorerwärmte Form mit einer konvexen oder konkaven Oberfläche, entsprechend der Gestalt einer Oberfläche der Kontaktlinse, bringt, um den Film zu erweichen,

2) aus dem Film mit einer zweiten schneidenden Form, die eine konkave oder konvexe Oberfläche entsprechend der Gestalt der zweiten Oberfläche der Kontaktlinse aufweist, Linsenmaterial ausstanzt, wobei die erste Form und die zweite Form zu einem Formhohlraum verbunden werden, der den Polyvinylalkohol enthält und der Gestalt der Kontaktlinse entspricht,

3) die verbundenen Formen zur Härtung des Polyvinylalkohols im Hohlraum in ausreichendem Masse abkühlt, so dass ein im wesentlichen die Form behaltender Körper in Gestalt der Kontaktlinse entsteht,

4) die Formen trennt und den im wesentlichen die Form behaltenden Körper aus Polyvinylalkohol in Gestalt der Kontaktlinse entnimmt,

5) ein Borat in einer zur Erhöhung des Elastizitätsmoduls des Polyvinylalkohols ausreichenden Menge mit dem im wesentlichen die Form behaltenden Körper aus Polyvinylalkohol in einem wässrigen Medium mit einem pH-Wert über 7 zur Bildung einer Kontaktlinse aus mit Borat vernetztem Polyvinylalkohol umsetzt und

6) die Kontaktlinse aus mit Borat vernetztem Polyvinylalkohol entnimmt.

17. Verfahren nach Anspruch 16, dadurch gekennzeichnet, dass der Film in Stufe 1) 0,01 bis 30 Gewichtsprozent Weichmacher, bezogen auf das Gewicht des Polyvinylalkohols enthält.

18. Verfahren nach Anspruch 17, dadurch gekennzeichnet, dass es sich beim Weichmacher um einen Polyol-Weichmacher handelt, der durch Waschen mit Wasser aus der verformten Kontaktlinse von Stufe 4) entfernt wird.

19. Verfahren nach Anspruch 16, dadurch gekennzeichnet, dass es sich beim Borat von Stufe 5) um Natriumtetraborat handelt.

Europäisches Patentamt

# EUROPÄISCHER RECHERCHENBERICHT

0077295

Nummer der Anmeldung

EP 82 81 0405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | POLYMER JOURNAL, Band 8, Nr. 1, 1976 HIROSHI OCHIAI et al.: "Mechanical and Thermal Properties of Poly(vinyl alcohol) Crosslinked by Borax", Seiten 131-133. * Seiten 131-133 * | 1-4 | B 29 D 11/02<br>C 08 L 29/04<br>C 08 F 8/42 |
| A | US-A-3 886 112 (J.J. WATSON) * Ansprüche 1,3,4 * | 1,5,6 | |

RECHERCHIERTE SACHGEBIETE (Int. Cl. 3)

B 29 D 11/02
C 08 L 29
C 08 F 8/42

Der vorliegende Recherchenbericht wurde für alle Patentansprüche erstellt.

| Recherchenort | Abschlußdatum der Recherche | Prüfer |
|---|---|---|
| DEN HAAG | 17-01-1983 | PERMENTIER W.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82